# EUROPEAN PATENT APPLICATION

(11) **EP 4 841 871 A1**
(43) Date of publication of application: **18.11.2026**
(21) Application number: 25176857.8
(22) Date of filing: 16.05.2025
(51) Int. Cl.: H02M 1/00, H02M 1/38, H02M 3/00, H02M 3/335, H02M 3/158

(54) **CONVERTER AND METHOD FOR OPERATING A CONVERTER**

(71) Applicant: Tridonic GmbH & Co. KG, 6851 Dornbirn (AT)
(72) Inventor: Schneider, Miguel Philipp, 6851 Dornbirn (AT); Lochmann, Frank, 6851 Dornbirn (AT)
(74) Representative: Rupp, Christian

(57) **Abstract**

The invention relates to a converter (10), in particular an LLC converter. The converter (10) comprises a switching circuit (15) preferably connected to an input of the converter (10); wherein the switching circuit (15) comprises a first switch (S1) and a second switch (S2) connected in series. The converter (10 ) further comprises a control unit (12) configured to control the first and the second switch (S1, S2) to execute a number of switching sequences (21), wherein each switching sequence (21) comprises, for a certain period of time, alternately activating and deactivating the first and second switch with a certain frequency, such that the first switch (S1) is activated while the second switch (S2) is deactivated, and vice versa; wherein the control unit (12) is configured to introduce a respective time interval (22) between a deactivation of the first switch (S1) and subsequent activation of the second switch (S2), and vice versa, within each switching sequence (21); and wherein the control unit (12) is configured to vary a duration of the time interval (22) during at least one of the switching sequences (21).

## Description

### TECHNICAL FIELD OF THE INVENTION

The invention relates to a converter, in particular to an LLC converter. The invention further relates to a system for providing an electrical power supply which comprises a converter and to a method for operating a converter.

### BACKGROUND OF THE INVENTION

Isolated converters, such as resonant LLC converters, are power conversion devices that use a transformer to separate their input and output sides. This provides additional safety, as the output can be protected from interferences from the input side.

Isolated converters are often resonant converters which are preferably operated with a frequency close to their resonant frequency. A change of output current or voltage is performed by modulating high frequency pulses of the resonant converter with a low frequency (LF) pulse width modulation PWM signal. By adjusting the duty cycle of the PWM signal, a reduction of the power transmitted by the converter, and thus the resulting current through the load can be achieved. In this way the converter can operate in a low load range.

However, at the start of an on-period of the LF pulse, i.e. when the primary side switches start to operate at high frequency, the converter may immediately draw a large current which can result in significant stress on the converter circuit. Subsequently, during the continued on-period of the LF pulse, the power transmission by the converter can drop significantly such that substantially no power is transmitted any more.

For instance, at the start of the LF PWM pulse, the transformer voltage of the converter tends to oscillate due to the resonant current. This can lead to a "voltage overshoot" at the output. Since the output voltage remains higher than the primary transformer voltage, no or only little energy will be transferred during the remaining LF PWM pulse length.

### SUMMARY OF THE INVENTION

In view of the above, it is an object of the invention to overcome the above-mentioned drawbacks and disadvantages. In particular, it is an object to improve the power transmission in a converter operating in a low load range.

The object is achieved by the features of the enclosed independent claims. Advantageous implementations of the present invention are further defined in the dependent claims.

According to a first aspect, the invention relates to a converter, in particular an LLC converter. The converter comprises: a switching circuit preferably connected to an input of the converter; wherein the switching circuit comprises a first switch and a second switch connected in series. The converter further comprises a control unit configured to control the first and the second switch to execute a number of switching sequences, wherein each switching sequence comprises, for a certain period of time, alternately activating and deactivating the first and second switch with a certain frequency, such that the first switch is activated while the second switch is deactivated, and vice versa; wherein the control unit is configured to introduce a respective time interval between a deactivation of the first switch and subsequent activation of the second switch, and vice versa, within each switching sequence; and wherein the control unit is configured to vary a duration of the time interval during at least one of the switching sequences.

This achieves the advantage that the power transmission from the primary to the secondary side of the converter during a switching sequence can be adapted and, in particular, made more uniform over the duration of the sequence. For instance, the duration of the time interval can be adapted in such a way, that a current drawn at the start of the switching sequence is reduced. This can reduce stress on the converter circuit.

It is emphasized that the current draw can not only be reduced by this approach, but could be adapted in any desired manner (e.g., enhanced, reduced, or kept constant).

The converter can be a DC/DC converter which converts a DC input signal to a DC output signal of a different voltage level. The converter can be a non-isolated converter or an isolated converter, such as an LLC converter (also referred to as: resonant LLC converter).

The switching circuit can be a half bridge circuit, wherein the first switch is a high side switch and the second switch is a low side switch of the half bridge circuit. The switching circuit can be configured to receive an input voltage, e.g. a DC voltage or a rectified AC voltage, and to adapt said input voltage based on the switching operation.

In particular, a switch being activated means it is switched on, and a switch being deactivated means it is switched off. The first and second switches may be MOSFETs which are controlled by the control unit via a respective control signal.

The switches may be alternately activated and deactivated during a switching sequence with a high frequency (HF). The duration of each switching sequence and the time between two consecutive switching sequences may be defined by an LF PWM (low frequency pulse width modulation) signal, wherein the LF PWM signal has a lower frequency than the HF PWM signal.

The time interval between the deactivation of the first switch and subsequent activation of the second switch (or vice versa) during a switching sequence can be a so-called "dead time". During this time interval both the first and the second switch are deactivated.

The control unit may be an integrated circuit (IC), e.g. an ASIC, an FPGA, a microcontroller, or a different type of control circuit.

In an implementation form of the first aspect, during a first phase of the at least one switching sequence, the control unit is configured to set the time interval to a first duration; and during a second phase of the switching sequence following the first phase, the control unit is configured to set the time interval to a second duration shorter than the first duration. This achieves the advantage that a current draw of the converter during an initial phase of the switching sequence can be reduced by means of an enhanced dead time in this phase.

In an implementation form of the first aspect, the control unit is configured to continuously or stepwise decrease the duration of the time interval during a portion of the at least one switching sequence or during the full length of the switching sequence. This achieves the advantage that a current draw of the converter during an intimal phase of the switching sequence can be reduced and energy can be more evenly transferred over the whole duration of the switching sequence.

In an implementation form of the first aspect, the control unit is configured to continuously or stepwise decrease the duration of the time interval during an initial phase of the at least one switching sequence and to keep the duration of the time interval constant after said initial phase. This achieves the advantage that a current draw of the converter during the intimal phase of the switching sequence can be reduced and energy can be more evenly transferred over the full length of the switching sequence.

In an implementation form of the first aspect, the control unit is configured to vary the duration of the time interval during the at least one switching sequence based on a predefined pattern or function. This achieves the advantage that no specific measurements need to be carried out for the dead time adaption, thus, reducing complexity.

For instance, the predefined pattern or function determines the reduction of the time interval during a switching sequence depending on a time that has passed since the initiation of the switching sequence.

In an implementation form of the first aspect, the predefined pattern or function is stored in a look-up table.

In an implementation form of the first aspect, the control unit is configured to vary the duration of the time interval during the at least one switching sequence based on an input current of the converter.

In particular, the input current is the current drawn by the converter. If the converter is an isolated converter, this input current can be received on a primary side of a galvanic isolation of the converter, e.g., by an input line of the switching circuit.

In an implementation form of the first aspect, the control unit is configured to receive, at an input of the control unit, a sensing signal which represents the input current of the converter; wherein the control unit is configured to monitor said input current based on the sensing signal. This achieves the advantage that the input current can be directly monitored and the time interval (dead time) can be adjusted in response to the input current.

In an implementation form of the first aspect, the control unit is configured to vary the duration of the time interval during the at least one switching sequence such that the input current does not exceed a first current threshold value. This achieves the advantage that stress and potential damage to the converter due to excessive current draw at the start of a switching sequence can be avoided.

In an implementation form of the first aspect, the control unit is configured to decrease the duration of the time interval after initiating the at least one switching sequence until the input current reaches a second current threshold value and to subsequently keep the time interval constant.

In an implementation form of the first aspect, the converter is an isolated converter which comprises a galvanic isolation stage, wherein the switching circuit is arranged on a primary side of the galvanic isolation stage. A center point between the first and the second switch may be connected to a resonant tank circuit and/or a transformer of the isolated converter.

The galvanic isolation stage may be implemented by the transformer comprising magnetically coupled primary and secondary windings.

According to a second aspect, the invention relates to a system comprising the converter of the first aspect of the invention and at least one voltage-reducing stage, in particular a Buck converter, which is connected to an output of the converter.

If the converter is an isolated converter, the output of the converter can be on a secondary side of its galvanic isolation stage.

The converter and voltage-reducing stage can form an electrical power supply.

In an implementation form of the second aspect, the system further comprises a load which is supplied with electrical power from the converter and the voltage-reducing stage.

The load can be a high current draw load which requires a relatively low DC supply voltage, for example a GPU (graphics processing unit) in a datacenter.

According to a third aspect, the invention relates to a method for operating a converter, in particular an LLC converter, wherein the converter comprises a a switching circuit preferably connected to an input of the converter, wherein the switching circuit comprises a first switch and a second switch connected in series. The method comprises: controlling control first and the second switch to execute a number of switching sequences, wherein each switching sequence comprises, for a certain period of time, alternately activating and deactivating the first and second switch with a certain frequency, such that the first switch is activated while the second switch is deactivated, and vice versa; introducing a respective time interval between a deactivation of the first switch and subsequent activation of the second switch, and vice versa, within each switching sequence; and varying a duration of the time interval during at least one of the switching sequences.

The method according to the third aspect of the invention can be used to operate the converter according to the first aspect of the invention.

In an implementation form of the third aspect, during a first phase of the at least one switching sequence, the time interval is set to a first duration; and during a second phase of the switching sequence following the first phase, the time interval is set to a second duration shorter than the first duration.

In an implementation form of the third aspect, the step of varying the duration of the time interval comprises: continuously or stepwise decreasing the duration of the time interval during a portion of the at least one switching sequence or during the full length of the switching sequence.

In an implementation form of the third aspect, the step of varying the duration of the time interval comprises: continuously or stepwise decreasing the duration of the time interval during an initial phase of the at least one switching sequence and keeping the duration of the time interval constant after said initial phase.

In an implementation form of the third aspect, the duration of the time interval during the at least one switching sequence is varied based on a predefined pattern or function.

In an implementation form of the third aspect, the duration of the time interval during the at least one switching sequence is varied based on an input current of the converter.

In an implementation form of the third aspect, the method comprises: receiving, at an input of the control unit, a sensing signal which represents the input current of the converter; wherein said input current is monitored based on the sensing signal.

For example, the duration of the time interval during the at least one switching sequence is varied such that the input current does not exceed a first current threshold value.

According to a further example, the duration of the time interval is decreased after initiating the at least one switching sequence until the input current reaches a second current threshold value and is subsequently kept constant.

In an implementation form of the second aspect, the converter is an isolated converter which comprises a galvanic isolation stage, wherein the switching circuit is arranged on a primary side of the galvanic isolation stage. A center point between the first and the second switch may be connected to a resonant tank circuit and/or a transformer of the isolated converter.

### BRIEF DESCRIPTION OF THE DRAWINGS

Exemplary embodiments of the invention are now further explained with respect to the drawings by way of example only, and not for limitation. In the drawings:
- Fig. 1: shows a schematic diagram of a converter according to an embodiment;
- Fig. 2: shows control signals for controlling a switching circuit of a converter according to an embodiment;
- Figs. 3A-B: compare operating parameters of a converter with and without a dead time adaption according to an embodiment;
- Fig. 4: shows a schematic diagram of a system according to an embodiment; and
- Fig. 5: shows a flow diagram of a method for operating a converter according to an embodiment.

### DETAILED DESCRIPTION OF EMBODIMENTS

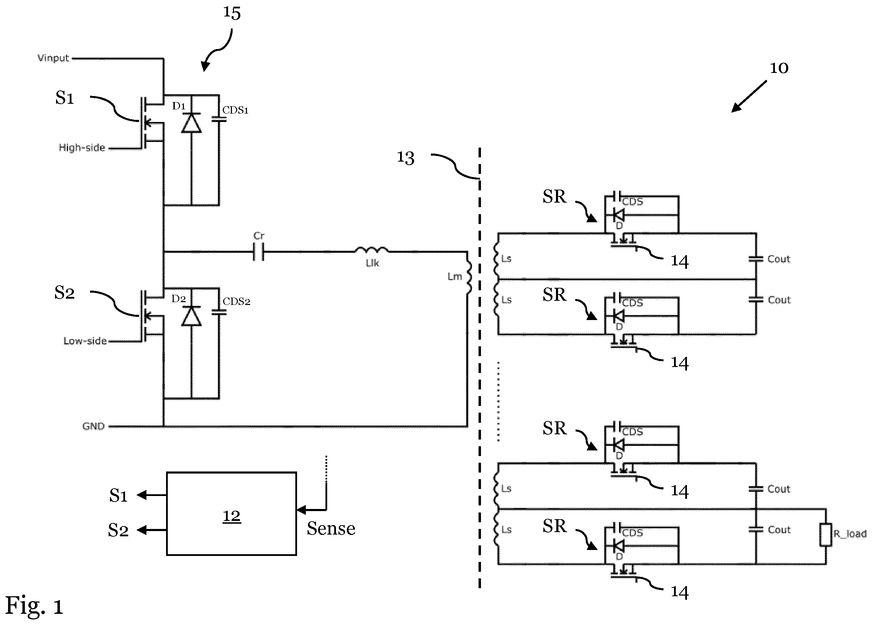

Fig. 1 shows a schematic diagram of a converter 10 according to an embodiment.

The converter 10 comprises a switching circuit 15, wherein the switching circuit 15 comprises a first switch S1 and a second switch S2 connected in series. Preferably, the switching circuit 15 is directly or indirectly connected to an input of the converter 10.

The converter 10 further comprises a control unit 12 configured to control the first and the second switch S1, S2 to execute a number of switching sequences, wherein each switching sequence comprises, for a certain period of time, alternately activating and deactivating the first and second switch S1, S2 with a certain frequency, such that the first switch S1 is activated while the second switch S2 is deactivated, and vice versa; wherein the control unit 12 is configured to introduce a respective time interval between a deactivation of the first switch S1 and subsequent activation of the second switch S2, and vice versa, within each switching sequence; and wherein the control unit 12 is further configured to vary a duration of said time interval during at least one of the switching sequences.

The time interval between the deactivation of the first switch and subsequent activation of the second switch (or vice versa) can be a so-called "dead time". During this time interval both the first and the second switch are deactivated. As the first and second switch are activated/deactivated with a certain frequency, adapting this time interval (dead time) during the at least one switching sequence changes the duty cycle of the switching circuit and, thus, the current draw of the converter during the switching sequence.

In this way, the power transmission from a primary to a secondary side of the converter 10 during the at least one switching sequence may be adapted and, in particular, made more uniform over the duration of the sequence, as will be explained in more detail below.

In the example shown in Fig. 1, the converter 10 is an isolated converter, in particular an LLC converter (also referred to as: resonant LLC converter). However, in principle, the converter 10 could also have a different converter topology without a galvanic isolation (i.e., the converter could be a non-isolated converter). For instance, in such a non-isolated converter feedback signals could be fed to the control unit 12 from a secondary or output side of the converter without traversing a galvanic isolation.

The converter 10, in the form of the isolated converter, comprises a galvanic isolation stage 13 as shown in Fig. 1, wherein the switching circuit 15 is arranged on a primary side of the galvanic isolation stage 13. Further, as shown in Fig. 1, a center point between the first and the second switch S1, S2 can be connected to a resonant tank circuit and/or a transformer of the isolated converter 10.

For example, the control unit 12 is configured to vary the duration of the respective time interval during each of the number of switching sequences.

The converter 10 may be a DC/DC converter which converts a DC input signal to a DC output signal of a different voltage level. The converter 10 may be an intermediate bus converter.

The converter 10 can operate over a wide load range. For instance, the nominal power of the converter 10 is 1.5 kW and the load can be adjusted between 1% and 100%.

The switching circuit 15 may be a half bridge circuit, wherein the first switch S1 is a high side switch and the second switch is a low side switch S2 of the half bridge circuit. The switching circuit can be configured to receive an input voltage Vᵢₙₚᵤₜ, e.g. a DC voltage or a rectified AC voltage, and to adapt said input voltage based on the switching operation.

The first and second switches S1, S2 may be MOSFETs which are controlled by the control unit 12 via a respective control signal, as indicated by the outgoing arrows labeled S1, S2.

The switching circuit 15 may further comprise a respective diode D1, D2 and a capacitor CDS1, CDS2 connected in parallel to the switches S1, S2.

During each switching sequence, the switches S1, S2 may be alternately activated and deactivated with a high frequency (HF). For instance, the control unit 12 controls the operation of the first and the second switch during each switching sequence by means of a respective HF PWM (high frequency pulse width modulation) signal.

The duration of each switching sequence (i.e., the period of time during which the switches S1, S2 are alternately activated and deactivated) and the time between two consecutive switching sequences can be defined by an LF PWM (low frequency pulse width modulation) signal. The LF PWM signal has a much lower frequency than the HF PWM signal. A switching sequence may thus be an LF PWM cycle.

In particular, the LF PWM modulation of the switching operation is carried out when the converter 10 is under low load (e.g., in case the converter operates at 3% nominal power). The LF PWM signal could have a fixed frequency and a variable duty cycle.

The control unit 12 may be an integrated circuit (IC), e.g. an ASIC, an FPGA, a microcontroller, or a different type of control circuit.

The galvanic isolation 13 stage of the isolated converter 10 can be implemented or formed by the transformer of the converter 10. The transformer may comprise a primary winding Lm on a primary side and at least one secondary winding Ls on a secondary side of the isolation stage 13, and a magnetic core coupling the primary and secondary windings Lm, Ls, wherein there is no direct electrical connection between the primary and secondary windings Lm, Ls.

The transformer of the isolated converter 10 can be a matrix transformer. A matrix transformer is a special kind of transformer which can comprise a plurality of transformer elements, e.g. multiple cores, arranged in a specific pattern (e.g., along an axis).

For instance, the transformer of the converter 10 may comprise a PCB. The primary windings Lm and/or the secondary windings Ls can be formed by conductive lines on the PCB. Thus, the transformer can be a planar transformer. The conductive lines forming the primary and secondary windings Lm, Ls may be arranged in multiple layers on top of each other on the PCB. The conductive lines forming a single primary or secondary winding Ls, Lm can be arranged on one layer or on multiple layers on top of each other.

The isolated converter 10, in the LLC design, can further comprise the resonant tank comprising a resonant capacitor Cr and a resonant inductance Llk which are connected to the primary windings Lm. Furthermore, a magnetizing inductance can arise from the primary winding Lm.

The isolated converter 10 can further comprise a plurality of rectification circuits SR on the secondary side of the isolation stage 13. Thereby, each secondary winding Ls can be connected to one of the rectification circuits SR.

Each rectification circuit SR may comprise a controllable switch 14. In this way, active and/or synchronous rectification can be performed by the rectification circuits SR. For instance, each rectification circuit further comprises a diode D and a capacitor CDS connected in parallel to the switch 14.

The converter 10 can further comprise a number of output capacitors Cout which can smooth the output voltage before forwarding it to a load R_load. The load R_load can be supplied by said output voltage. The load can be an electrical device or a further circuit stage.

In the example shown in Fig. 1, the load is connected in parallel to a single output capacitor Cout. However, the plurality of output capacitors Cout of the converter 10 could also be connected in parallel to supply the output voltage to the load R_load.

Now returning to the adaption of the time interval (dead time) between subsequent activations of switches S1, S2 during a switching sequence:
By means of this dead time adaption, a current drawn at the start of the switching sequence can be reduced. For instance, this reduces stress on the converter circuit at the start of each switching sequence.

In the simplest case, the control unit 12 may switch between two different time intervals (dead times) within a switching sequence. For example, during a first phase of the switching sequence, the control unit 12 is configured to set the time interval to a first duration, and during a second phase of the switching sequence following the first phase, the control unit 12 is configured to set the time interval to a second duration shorter than the first duration.

However, preferably, there are more than two discrete and different "dead time phases" within a switching sequence.

For example, the control unit 12 is configured to continuously or stepwise decrease the duration of the time interval (dead time) during at least a portion of the switching sequence or during the full length of the switching sequence. For instance, the dead time is continuously reduced until the time of a high current draw at the start of the switching sequence has passed.

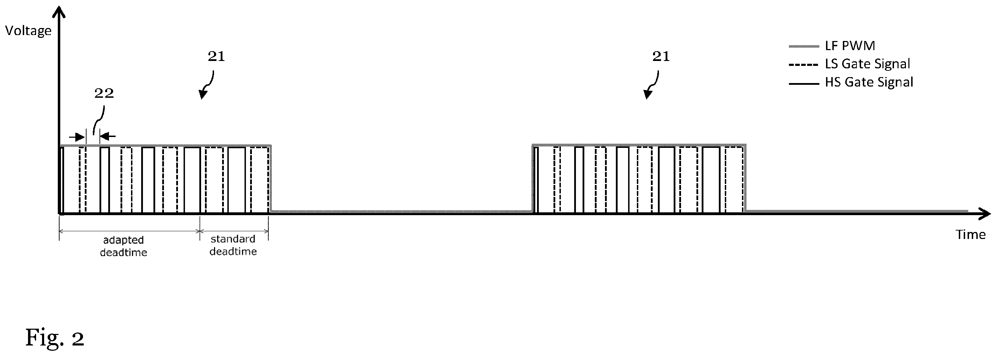

Fig. 2 shows exemplary control signals for controlling the switching circuit 15 of the converter 10. Thereby, two switching sequences 21 are shown, wherein each switching sequence 21 comprises alternating control signals for the first and second switch S1, S2, respectively. For example, the control signals are gate signals for the low side (LS) and high side (HS) switch, wherein the control signal for the LS switch is shown by a dashed black line and the control signal for the HS switch by a bold black line.

The control signals can be forwarded by the control unit 12 to respective gates of these switches S1, S2. Each subsequent activation of the first and the second switch S1, S2 (or vice versa) within the switching sequence 21 may be referred to as an "HF cycle".

The time interval 22 between two control signals is the dead time. As can be seen in Fig. 2, increasing the dead time reduces the activation times of the switches S1, S2, and vice versa.

Fig. 2 further shows the LF PWM signal (gray bold line) which defines the start and duration of the switching sequences. 21

As shown in Fig. 2, the control unit 12 can be configured to continuously or stepwise decrease the duration of the time interval 22 during an initial phase of the at least one switching sequence (adapted dead time mode) and to keep the duration of the time interval 22 constant after said initial phase (standard dead time mode).

Within the adaptive dead time mode, the dead time during a switching sequence can be changed in a cycle-to-cycle manner (i.e., HF-Cycle by HF-Cycle). Meaning, in the very first HF cycle within the switching sequence, the dead time can be highest and with every further HF cycle, the dead time is decreased until it reaches a nominal setting.

By means of this adaptive dead time control, the resonant current especially at the beginning of a switching sequence 21 may be inhibited. As a result, the energy transfer over the full switching sequence 21 can be more uniform and a voltage overshoot can be avoided.

For example, the control unit 12 is configured to vary the duration of the time interval during the at least one switching sequence based on a predefined pattern or function (so-called "feed forward" approach). The predefined pattern or function may determine the reduction of the time interval during a switching sequence 21 depending on a time that has passed since the initiation of the switching sequence and/or based on a number of HF cycles.

For instance, a counter counts the HF cycles from the start of the switching sequence 21, wherein the dead time setting for each cycle is predetermined, e.g. in the following manner:

| | |
|---|---|
| **.func dead_time(counter) {table(counter,** | |
| **+** | **1, 100ns,** |
| **+** | **2, 80ns,** |
| **+** | **3, 60ns,** |
| **+** | **4, 40ns,** |
| **+** | **5, 20ns,** |
| **+** | **6, 20ns,** |
| **+** | **7, 20ns,** |
| **+** | **8, 20ns,** |
| **+** | **9, 20ns,** |
| **+** | **10, 20ns)}** |

In the above example, the dead time is stepwise reduced from 100 ns to 20 ns over the first five HF cycles and then kept constant. In principle, the adaption of the dead time can be carried out from cycle to cycle (as shown above) or in bigger steps within a switching sequence.

The predefined pattern or function could be stored in a look-up table. The look up table may be stored in a memory of the control unit 12.

Alternatively to the feed forward approach, the dead time control may be adaptive in the sense that it is carried out based on a feedback signal. The feedback signal may represent an input current received on the primary side of the converter 10. In this case, the control unit 12 can be configured to vary the duration of the time interval during the switching sequence based on the feedback signal or more specifically based on the input current represented by the feedback signal.

Hereby, the input current may be the current drawn by the converter 10. This current can be received on the primary side, e.g. by an input line of the switching circuit.

For example, the control unit 12 comprises an input (labeled "Sense" in Fig. 1), e.g. in the form of a pin, which receives a sensing signal representing the input current (i.e., the feedback signal). The control unit 12 can be configured to monitor the input current based on this sensing signal.

The input of the control unit may be electrically connected to the converter circuit, e.g. to the switching circuit 15 or an element upstream of the switching circuit 15. A measurement element, e.g. a shunt resistor, could be arranged between the control unit input and the converter circuit for generating the sensing signal based on the input current.

For instance, in case of adaptive dead time control, the control unit 12 is configured to vary the duration of the time interval (dead time) during the switching sequence such that the input current does not exceed a first current threshold value. In this way it can be avoided that an excessive current is drawn, especially at the start of the switching sequence. The first current threshold value may be a maximum input current which should not be exceeded.

According to a further example, the control unit 12 is configured to decrease the duration of the time interval after initiating the at least one switching sequence until the input current reaches a second current threshold value and to subsequently keep the time interval constant. In this way, a desirable input current can be set which allows for a more even energy transfer from primary to secondary side of the converter 10 during the switching sequence.

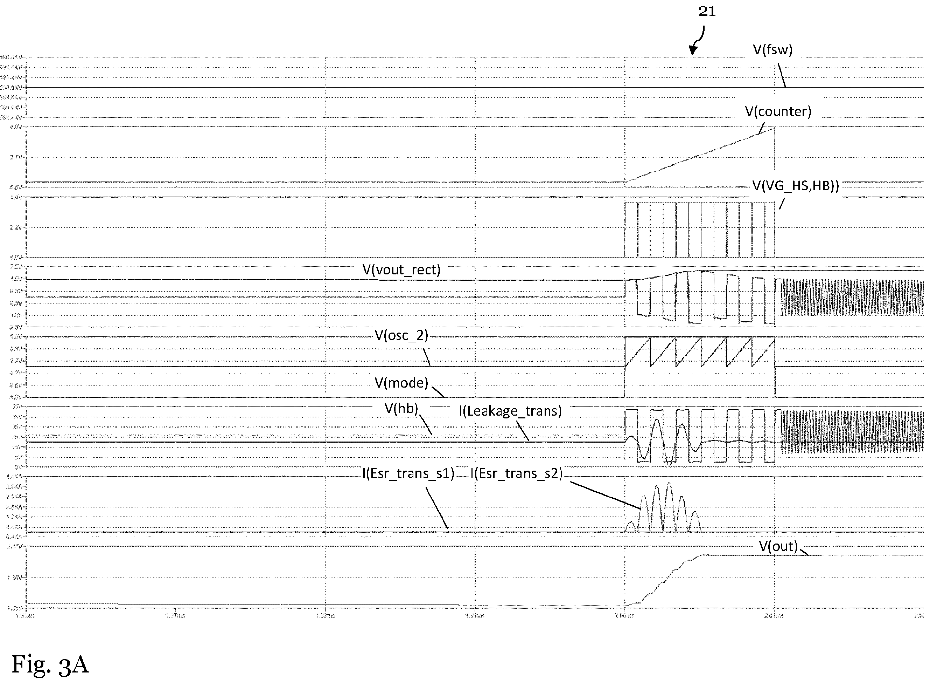

Figs. 3A-B compare exemplary operating parameters of the converter 10 operating with and without an adaption of the duration of the time interval (dead time) within a switching sequence 21.

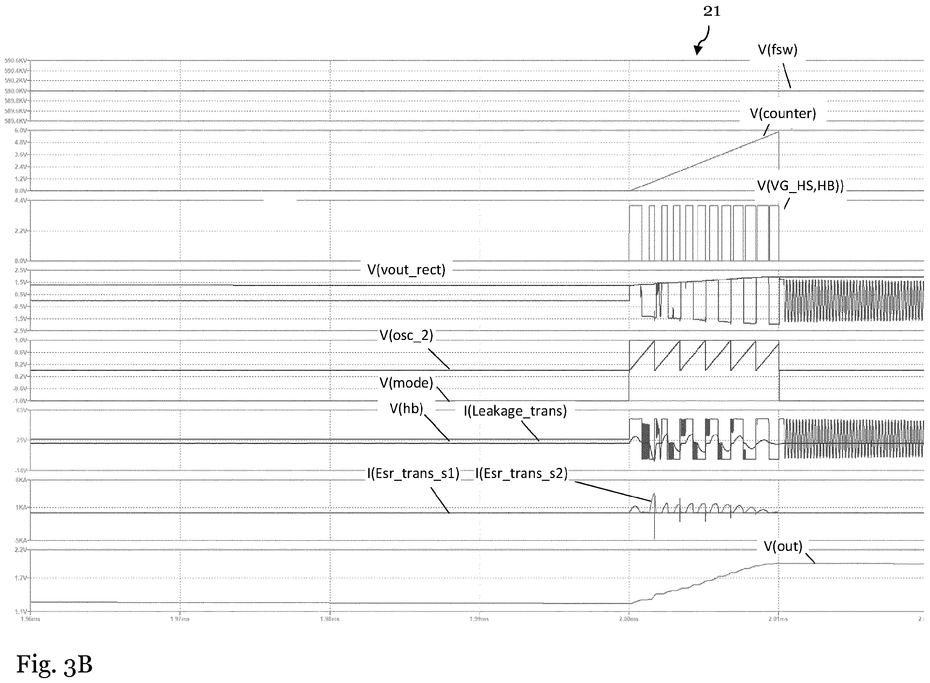

Thereby, Fig. 3A shows an example of the converter operation without dead time adaption and Fig. 3B shows an example of the converter operation with dead time adaption. In each case, the input voltage is 52 V and the converter supplies a low load with 1% nominal power. In the examples shown in Figs. 3A and 3B, a switching sequence 21 is carried out starting at the 2.00 ms mark.

In each case, the eight operational parameters (from top to bottom) are:
1) a switching frequency V(fsw),
2) a dead time counter V(counter),
3) half bridge-signals V(VG_HS,HB), i.e., the control signals CS1, CS2,
4) a transformer voltage and output voltage V(out_rect),
5) an LF-PWM (V(mode)) and HF-cycle Counter (V(osc_2)),
6) a half bridge midpoint voltage (V(hb)) and a resonant current (I(Leakage_trans)),
7) synchronous rectifier currents I(Esr_trans_s1) and I(Esr_trans_s2), and
8) an output voltage V(out).

Hereby, the midpoint voltage refers to the voltage at the center point between the switches S1, S2. For instance, this node is connected to the resonant tank as shown in Fig. 1.

When comparing the plots in Fig. 3A and 3B, it can be seen that without the dead time control (i.e., without the control of the time interval between the subsequent activation of switches during the switching sequence) there is a strong overshoot, especially of the resonant current at the beginning of the switching sequence 21. This overshoot can be strongly reduced by means of the adaptive dead time control as can be seen in Fig. 3B.

It is emphasized that the current draw can not only be reduced by this approach (i.e., by means of the dead time adaption), but could be adapted in any desired manner (e.g., enhanced, reduced, or kept constant).

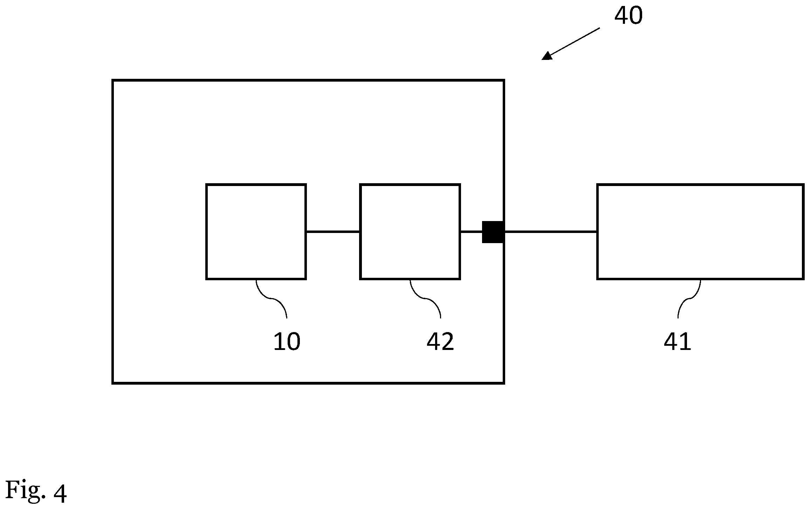

Fig. 4 shows a schematic diagram of a system 40 according to an embodiment, wherein the system comprises the converter 10 (as e.g. shown in Fig. 1) and at least one voltage-reducing stage 42, in particular a Buck converter, which is connected to an output of the converter, in particular on a secondary side of its isolation stage. The voltage-reducing stage 42 can reduce an output voltage of the converter 10.

The system 10 can provide an electrical power supply to a connected load 41. The load could also be a component of the system 40.

The load 41 can be a high current draw load which requires a relatively low DC supply voltage, e.g. a GPU in a datacenter. The load 41 could also comprise an LED luminaire.

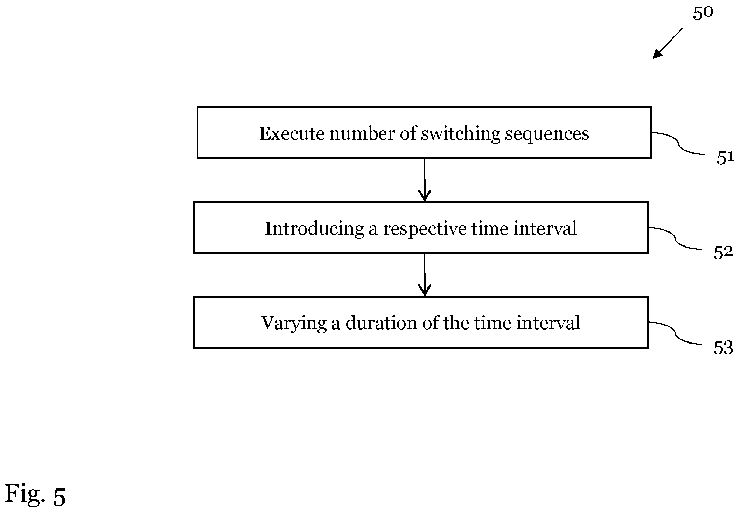

Fig. 5 shows a flow diagram of a method 50 for operating a converter 10 according to an embodiment. Thereby, the converter 10 can be a converter as shown in Fig. 1, which comprises the switching circuit 15 preferably connected to the input of the converter and comprising the first switch S1 and the second switch S2 connected in series.

The method 50 comprises the steps of: controlling 51 the first and the second switch S1, S2 to execute a number of switching sequences 21, wherein each switching sequence 21 comprises, for a certain period of time, alternately activating and deactivating the first and second switch S1, S2 with a certain frequency, such that the first switch S1, S2 is activated while the second switch is deactivated, and vice versa; introducing 52 a respective time interval between a deactivation of the first switch S1 and subsequent activation of the second switch S2, and vice versa, within each switching sequence 21; and varying 53 a duration of the time interval during at least one of the switching sequences 21.

The step of varying 53 the duration of the time interval may comprise continuously or stepwise decreasing the duration of the time interval during a portion of the at least one switching sequence 21 or during the full length of the switching sequence 21.

The duration of the time interval during the at least one switching sequence 21 can be varied based on an input current of the converter 10. For instance, the input current is received on the primary side of the isolated converter 10.

While various embodiments of the present invention have been described above, it should be understood that they have been presented by way of example only, and not by limitation. Numerous changes to the disclosed embodiments can be made in accordance with the disclosure herein without departing from the spirit or scope of the invention. Thus, the breadth and scope of the present invention should not be limited by any of the above-described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A converter (10), in particular an LLC converter, comprising:
a switching circuit (15) preferably connected to an input of the converter (10);
wherein the switching circuit (15) comprises a first switch (S1) and a second switch (S2) connected in series; and
a control unit (12) configured to control the first and the second switch (S1, S2) to execute a number of switching sequences (21), wherein each switching sequence (21) comprises, for a certain period of time, alternately activating and deactivating the first and second switch with a certain frequency, such that the first switch (S1) is activated while the second switch (S2) is deactivated, and vice versa;
wherein the control unit (12) is configured to introduce a respective time interval (22) between a deactivation of the first switch (S1) and subsequent activation of the second switch (S2), and vice versa, within each switching sequence (21); and
wherein the control unit (12) is configured to vary a duration of the time interval (22) during at least one of the switching sequences (21).

2. The converter (10) of claim 1,
wherein, during a first phase of the at least one switching sequence (21), the control unit (12) is configured to set the time interval (22) to a first duration; and
during a second phase of the switching sequence (21) following the first phase, the control unit (12) is configured to set the time interval (22) to a second duration shorter than the first duration.

3. The converter (10) of claim 1 or 2,
wherein the control unit (12) is configured to continuously or stepwise decrease the duration of the time interval (22) during a portion of the at least one switching sequence (21) or during the full length of the switching sequence (21).

4. The converter (10) of claim 3
wherein the control unit (12) is configured to continuously or stepwise decrease the duration of the time interval (22) during an initial phase of the at least one switching sequence (21) and to keep the duration of the time interval (22) constant after said initial phase.

5. The converter (10) of any one of the preceding claims,
wherein the control unit (12) is configured to vary the duration of the time interval (22) during the at least one switching sequence (21) based on a predefined pattern or function.

6. The converter (10) of claim 5,
wherein the predefined pattern or function is stored in a look-up table.

7. The converter (10) of any one of the preceding claims,
wherein the control unit (12) is configured to vary the duration of the time interval (22) during the at least one switching sequence (21) based on an input current of the converter (10).

8. The converter (10) of claim 7,
wherein the control unit (12) is configured to receive, at an input of the control unit (12), a sensing signal which represents the input current of the converter (10);
wherein the control unit (12) is configured to monitor said input current based on the sensing signal.

9. The converter (10) of claim 7 or 8,
wherein the control unit (12) is configured to vary the duration of the time interval (22) during the at least one switching sequence (21) such that the input current does not exceed a first current threshold value.

10. The converter (10) of any one of claims 7 to 9,
wherein the control unit (12) is configured to decrease the duration of the time interval (22) after initiating the at least one switching sequence (21) until the input current reaches a second current threshold value and to subsequently keep the time interval (22) constant.

11. The converter (10) of any one of the preceding claims,
wherein the converter (10) is an isolated converter comprising a galvanic isolation stage (13);
wherein the switching circuit (15) is arranged on a primary side of the galvanic isolation stage (13); and
wherein a center point between the first and the second switch (S1, S2) is preferably connected to a resonant tank circuit and/or a transformer of the isolated converter (10).

12. A system (40), comprising:
the converter (10) of any one of the preceding claims, and
at least one voltage-reducing stage (42), in particular a Buck converter, which is connected to an output of the converter (10).

13. The system (40) of claim 12, further comprising:
a load (41) which is supplied with electrical power from the converter (10) and the voltage-reducing stage.

14. A method for operating a converter (10), in particular an LLC converter, wherein the converter (10) comprises a switching circuit (15) preferably connected to an input of the converter (10), wherein the switching circuit (15) comprises a first switch (S1) and a second switch (S2) connected in series, the method comprising:
controlling the first and the second switch (S1, S2) to execute a number of switching sequences (21), wherein each switching sequence (21) comprises, for a certain period of time, alternately activating and deactivating the first and second switch with a certain frequency, such that the first switch (S1) is activated while the second switch (S1) is deactivated, and vice versa;
introducing a respective time interval (22) between a deactivation of the first switch (S1) and subsequent activation of the second switch (S2), and vice versa, within each switching sequence (21); and
varying a duration of the time interval (22) during at least one of the switching sequences (21).

15. The method of claim 14,
wherein the step of varying the duration of the time interval (22) comprises:
continuously or stepwise decreasing the duration of the time interval (22) during a portion of the at least one switching sequence (21) or during the full length of the switching sequence (21).

16. The method of claim 14 or 15,
wherein the duration of the time interval (22) during the at least one switching sequence (21) is varied based on an input current of the converter (10).
